# EUROPEAN PATENT APPLICATION

(11) **EP 4 080 824 A1**
(43) Date of publication of application: **26.10.2022**
(21) Application number: 20902349.8
(22) Date of filing: 26.11.2020
(51) Int. Cl.: H04L 12/24

(54) **COMMUNICATION PARAMETER CONFIGURATION METHOD AND APPARATUS, DEVICE AND STORAGE MEDIUM**

(30) Priority: 17.12.2019 CN 201911303886
(71) Applicant: ZTE Corporation, Shenzhen, Guangdong 518057 (CN)
(72) Inventor: JIANG, Meijuan, Shenzhen, Guangdong 518057 (CN); LI, Jie, Shenzhen, Guangdong 518057 (CN)
(74) Representative: Regimbeau
(86) International application number: PCT/CN2020/131770
(87) International publication number: WO 2021/121001

(57) **Abstract**

Provided are a communication parameter configuration method and apparatus, a device and a storage medium. The communication parameter configuration method is applied to a baseband unit and includes: acquiring a scene model configured in a network management, and acquiring a radio frequency capability model and a health degree model which are uploaded by a radio unit; determining a configuration parameter according to the scene model, the radio frequency capability model and the health degree model; and performing configuration according to the configuration parameter, and transmitting the configuration parameter to the radio unit.

## Description

This application claims priority to Chinese Patent Application No. 201911303886.6 filed with the China National Intellectual Property Administration (CNIPA) on Dec. 17, 2019, the disclosure of which is incorporated herein by reference in its entirety.

### TECHNICAL FIELD

The present application relates to the field of mobile communication technologies, for example, to a communication parameter configuration method and apparatus, a device, and a storage medium.

### BACKGROUND

A communication function of a distributed system consists of a radio unit (RU) and a baseband unit. In order to flexibly cope with different communication coverage scenes, different RU specifications are provided. Accordingly, in order to be compatible with various types of RUs, the baseband unit needs to be configured cooperatively with the RUs to limit the RU specifications. For example, due to the limitation of RU specifications, the RU can only support a format of in-phase Quadrature, IQ, data compressed by the baseband unit. If the baseband unit cannot obtain this demand in advance and is not configured according to a compressed mode, the RU cannot decode IQ data issued by the baseband unit normally, resulting in no power or abnormal power of the RU. In services, the Evolved Node B (eNodeB) will be out of service, and in severe cases, the RU power amplifier will be burned down. Therefore, during the initial configuration, it is necessary to artificially ensure that the configuration is correct.

In the related art, configuration constraints are performed on network management. When a configuration parameter does not match a type of the RU, configuration errors are reported, and operation and maintenance personnel modify errors according to the configuration errors, which will undoubtedly increase the coupling of the distributed system and the workload of version release.

### SUMMARY

The present application provides a communication parameter configuration method and apparatus, a device and a storage medium.

A communication parameter configuration method is provided and is applied to a baseband unit. The method includes: acquiring a scene model configured in network management, and acquiring a radio frequency capability model and a health degree model which are uploaded by a radio unit; determining a configuration parameter according to the scene model, the radio frequency capability model and the health degree model; and performing configuration according to the configuration parameter, and transmitting the configuration parameter to the radio unit.

A communication parameter configuration method is further provided and is applied to a RU. The method includes: acquiring a radio frequency capability model and a health degree model, and transmitting the radio frequency capability model and the health degree model to a baseband unit; and in a case where a configuration parameter transmitted by the baseband unit is received, completing configuration according to the configuration parameter.

A communication parameter configuration apparatus is further provided and is applied to a baseband. The apparatus includes a model acquisition module, a parameter matching module and a parameter configuration module. The model acquisition module is configured to acquire a scene model configured in network management, and acquire a radio frequency capability model and a health degree model which are uploaded by a radio unit; the parameter matching module is configured to determine a configuration parameter according to the scene model, the radio frequency capability model and the health degree model; and the parameter configuration module is configured to perform configuration according to the configuration parameter, and transmit the configuration parameter to the radio unit.

A communication parameter configuration apparatus is further provided and is applied to a RU. The apparatus includes a state model module and a configuration parameter module. The state model module is configured to acquire a radio frequency capability model and a health degree model, and transmit the radio frequency capability model and the health degree model to a baseband unit; and the configuration parameter module is configured to, in a case where a configuration parameter transmitted by the baseband unit is received, complete configuration according to the configuration parameter.

A device is further provided and includes one or more processors and a memory configured to store one or more programs. When executed by the one or more processors, the one or more programs cause the one or more processors to perform the communication parameter configuration method according to any embodiment of the present application.

A computer-readable storage medium is further provided, which is configured to store a computer program which, when executed by a processor, implements the communication parameter configuration method according to any embodiment of the present application.

### BRIEF DESCRIPTION OF DRAWINGS

FIG. 1 is an example diagram of a communication parameter configuration according to an embodiment of the present application;
FIG. 2 is a flowchart of a communication parameter configuration method according to an embodiment of the present application;
FIG. 3 is a flowchart of a communication parameter configuration method according to an embodiment of the present application;
FIG. 4 is an example diagram of a communication parameter configuration method according to an embodiment of the present application;
FIG. 5 is a structure diagram of a communication parameter configuration apparatus according to an embodiment of the present application;
FIG. 6 is a structure diagram of a communication parameter configuration apparatus according to an embodiment of the present application;
FIG. 7 is an example diagram of a communication parameter configuration apparatus according to an embodiment of the present application; and
FIG. 8 is a structure diagram of a device according to an embodiment of the present application.

### DETAILED DESCRIPTION

Embodiments of the present application are described below in conjunction with drawings. If not in collision, the embodiments of the present application and features in the embodiments may be combined with each other.

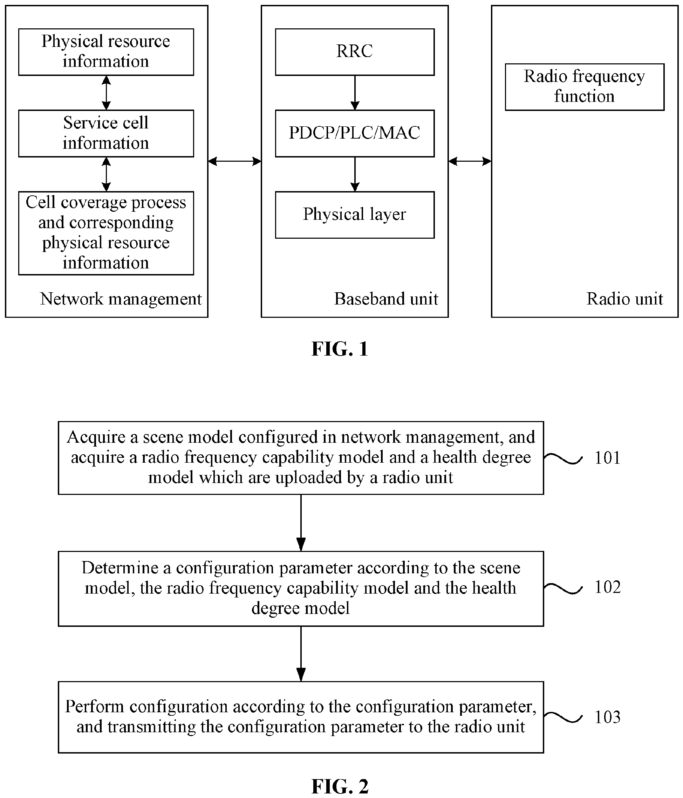

FIG. 1 is an example diagram of a communication parameter configuration according to an embodiment of the present application. Referring to FIG. 1, in a communication parameter configuration method, physical resource information and service cell information need to be statically bound and configured in the network management. After configuration is completed, a baseband unit and a radio unit execute corresponding functions, and the network management needs to monitor the configuration. When a configuration parameter is wrong, an operation and maintenance personnel modify the configuration parameter pertinently, which has high parameter configuration complexity.

FIG. 2 is a flowchart of a method for processing orders provided in Embodiment One of the present disclosure. An embodiment of the present application can be applied to parameter configuration of a distributed communication equipment, and the method can be performed by a communication parameter configuration apparatus, which can be implemented in software and/or hardware and can be integrated in the baseband unit. Referring to FIG. 2, the method of the embodiment of the present application includes the following operations.

In S101, a scene model configured in network management is acquired, and a radio frequency capability model and a health degree model which are uploaded by a radio unit are acquired.

The network management may be a platform to configure the communication network. A user may configure information, such as the physical resource information, the service cell information and the power saving requirements of the communication, in the network management. The scene model may be a business scene, which can include physical resource information, business service requirement information and quality of service information for achieving businesses. The radio unit may be a communication unit performing a radio frequency communication and may transmit a radio frequency signal.

In one embodiment, the user can configure the scene model in the network management, such as configure the physical resource information, the business service information and a quality of service requirement, and the baseband unit can acquire the scene model configured in the network management. The baseband unit can further acquire the radio frequency capability model and the health degree model uploaded by the radio unit, where the radio frequency capability model may include information of the radio frequency signal transmission capability, and the health degree may be state information of relevant equipment reflecting the radio frequency signal currently transmitted by the radio unit.

In S 102, a configuration parameter is determined according to the scene model, the radio frequency capability model and the health degree model.

The configuration parameter may be a relevant parameter for communication, and may include an associated configuration of a physical resource and logical cell information.

In the embodiment of the present application, the scene model, the radio frequency capability model and the health degree model can be stored in association with the configuration parameter. Different scene models, different radio frequency capability models and different health degree models correspond to different configuration parameters, and pre-stored configuration parameters can be searched according to the acquired scene model, the acquired radio frequency capability model and the acquired health degree model.

In one embodiment, the scene model includes the physical resource information and the business service information, where the physical resource information includes at least one of: connection relationship information between an antenna and a radio frequency channel, application information of an antenna, correlation relationship information between a baseband resource and a radio frequency channel, optical resource capability information, power information or optical port capability information; and the business service information includes at least one of: cell frequency point information, cell bandwidth information, a number of carriers, a business mode or a cell location.

In the embodiment of the present application, the scene model may be scene information configured by the user according to different businesses, and may include physical resource information and business service information. The physical resource information may include a physical resource for achieving a service, and the business service information may be a requirement or a condition for achieving a service. In one embodiment, the physical resource information may include connection relationship information between an antenna and a radio frequency channel, application information of an antenna, correlation relationship information between a baseband resource and a radio frequency channel, optical resource capability information, power information or optical port capability information; and the business service information may include cell frequency point information, cell bandwidth information, a number of carriers, a business mode and a cell location.

In S103, configuration is performed according to the configuration parameter, and the configuration parameter is transmitted to the radio unit.

In one embodiment, the baseband unit can be configured according to the configuration parameter, so that the baseband unit can complete baseband processing functions, such as encoding, multiplexing, modulation and spread spectrum, etc., corresponding to the radio unit and can transmit data conforming to the transmission requirement of the radio unit to the radio unit. In one embodiment, the baseband unit may further transmit the configuration parameter to the radio unit so that the radio is configured.

In the technical solution of the embodiment of the present application, the scene model configured in the network management is acquired and the radio frequency capability model and the health degree model of the radio unit are acquired, the configuration parameter may be searched through the scene model, the radio frequency capability model and the health degree model, and the configuration is performed according to the configuration parameter, so that an automatic configuration for parameters of the baseband unit is achieved, and the coupling degree of the distributed communication system and the workload of version release can be reduced.

In one embodiment, determining the configuration parameter according to the scene model, the radio frequency capability model and the health degree model includes: determining a matched pattern in a preset configuration parameter table according to the health degree model, in a case where the matching mode is a global matching mode, searching, in the preset configuration parameter table, a physical parameter matching the radio frequency capability model and an environment parameter matching the scene model, and taking the physical parameter and the environment parameter as the configuration parameter, and in a case where the matching mode is a semi-matching mode, searching, in the preset configuration parameter table, a physical parameter matching the radio frequency capability model and a preset environment parameter matching the radio frequency capability model, and taking the physical parameter and the preset environment parameter as the configuration parameter.

The matching mode may be a matching mode for determining the configuration parameter, due to the influence of hardware capability of the baseband unit and the radio unit, in order to ensure the optimization of performance, different types of configuration can be performed according to the strength of the radio frequency capability of the radio unit, the global matching mode in the matching mode may be a matching mode that completely matches the radio frequency capability model and the scene model, and the configuration parameters in the preset configuration parameter table can satisfy the requirements of the radio frequency capability model and the scene model; and the semi-matching mode may be configuration parameters matching only the requirements of the radio frequency capability model that satisfies the radio unit.

In the embodiment of the present application, the health degree model may be compared with a threshold condition, when the health degree model determines that the health degree of the current radio unit exceeds the threshold condition, the baseband unit and the radio unit can perform a global matching mode, that is, global matching is performed in the preset configuration table according to the radio frequency capability model and the scene model, so as to improve the communication capability between the baseband unit and the radio unit. A corresponding physical parameter can be found in a preset configuration set according to the radio frequency capability model, and a corresponding environmental parameter can be found in the preset configuration set according to the scene model. Different radio frequency capability models in the preset configuration table can be stored in association with different physical parameters, and different environment models in the preset configuration table can be stored in association with different environment parameters. When the health degree model does not satisfy the threshold condition, the current radio frequency capability of the radio unit is poor, the health degree model can only satisfy the physical parameters of the baseband unit and the physical parameters of the frequency unit, the configuration parameters of semi-matching mode are searched, the corresponding physical parameters can be searched in the preset configuration table according to the radio frequency capability model, the scene model cannot be used for matching the environment parameters, and a minimum required preset environment parameter can be preset. The preset environment parameter cannot affect the physical performance of the baseband unit and the physical performance of the radio unit, and the searched physical parameters and the preset environment parameters can be used as the configuration parameters. In one embodiment, in the process of determining the configuration parameters of the global matching mode, if matched physical parameters are searched according to the radio frequency capability model, however, when the corresponding environment parameters cannot be matched according to the scene model, the preset environment parameters can be selected as the environment parameters, or the environment parameters smaller than the environment parameters optimally matched with the scene model can be selected as a matching result of the scene model in the preset configuration parameter table.

In one embodiment, the radio capability model in the embodiment of the present application includes at least one of: a radio frequency type, optical port rate information, supporting antenna capability information, capacity capability information, business mode information, power amplifier capability information and frequency band information. The health degree model includes at least one of: a power amplifier state, a channel state, a single board state or an antenna state.

In the embodiment of the present application, the radio frequency capability model and the health degree model which are uploaded by the radio unit may be information representing the radio frequency transmission capability, the radio frequency capability model can be capability to transmit a radio frequency signal and may include the radio frequency type, the optical port rate information, the supporting antenna capability information, the capacity capability information, the business mode information, the power amplifier capability information, the frequency band information and the like, and the health degree model maybe capability representing the radio units being able to transmit the radio frequency signal at present and may include the power amplifier state, the channel state, the single board state and the antenna state. For example, the capability of the radio unit to transmit the radio frequency signal may be different under different channel states, and the capability of the frequency unit to transmit or receive the radio frequency signal at present may be determined by the power amplifier state, the channel state, the single board state, and the antenna state.

In one embodiment, the scene model further includes at least one of: a requirement parameter of quality of service or a quality of service of power saving.

In one embodiment, when the user sets the scene model in the network management, the user can also set a requirement parameter of quality of service or a quality of service of power saving. The radio unit can be adaptively configured according to the quality of service required by the user, and the communication power can be adjusted according to the service volume of the user, so that the radio unit satisfies the power saving requirement of the user.

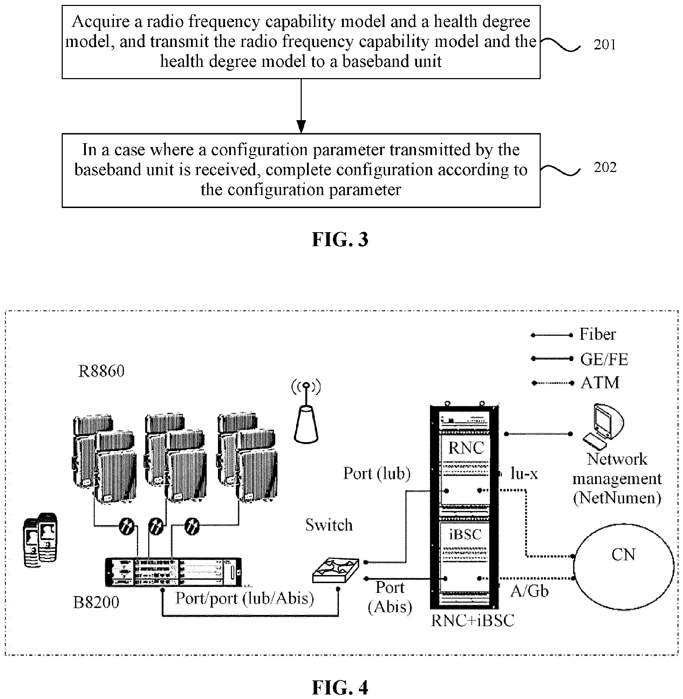

FIG. 3 is a flowchart of a method for processing orders provided in Embodiment One of the present disclosure. An embodiment of the present application can be applied to parameter configuration of a distributed communication equipment, and the method can be performed by a communication parameter configuration apparatus, which can be implemented in software and/or hardware and can be integrated in the radio unit. Referring to FIG. 3, the method of the embodiment of the present application includes the following operations.

In S201, a radio frequency capability model and a health degree model are acquired and transmitted to the baseband unit.

The radio capability model may be a parameter set that can reflect the capability of the radio unit to transmit the radio frequency signals and include a radio frequency type, optical port rate information, supporting antenna capability information, capacity capability information, business mode information, power amplifier capability information, frequency band information and the like. The health degree model may be a state that reflects the radio frequency signals transmitted by the radio unit at present and include a power amplifier state, a channel state, a single board state and an antenna state.

In one embodiment, the radio frequency capability model may be stored in the radio unit in advance, the radio frequency capability model stored in advance can be acquired, and the health degree model may be acquired by self-checking of the radio unit, the acquired power amplifier state, the acquired channel state, the acquired single board state and the acquired antenna state are taken as the health degree model of the radio unit, and the acquired radio frequency capability model and the acquired health degree model can be transmitted to the baseband unit.

In S202, when a configuration parameter transmitted by the baseband unit is received, configuration is completed according to the configuration parameter.

In the embodiment of the present application, the configuration parameter transmitted by the baseband unit may be acquired, and the configuration is performed according to the configuration parameter to achieve a radio frequency function adapted to the baseband unit. For example, according to the configuration parameter, the power amplifier state of the radio unit may be changed to adapt to the communication of the baseband unit.

In the technical solution of the embodiment of the present application, the radio frequency capability model and the health degree model are acquired and transmitted to the baseband unit, the configuration parameter issued by the baseband unit is acquired, and the configuration is completed according to the configuration parameter, so that an automatic configuration for parameters of the baseband unit is achieved, the health degree of the radio unit can be monitored in real time, the configuration parameter is adjusted in time, the failure rate of the radio unit is reduced and the communication quality of service is improved.

In one embodiment, acquiring the radio frequency capability model and the health degree model and transmitting the radio frequency capability model and the health degree model to the baseband unit include: when a power-up signal is acquired, saving at least one of the following as the radio frequency capability model: a radio frequency type, optical port rate information, supporting antenna capability information, capacity capability information, business mode information, power amplifier capability information or frequency band information which are acquired, and saving at least one of the following as the health degree model: a power amplifier state, a channel state, a single board state or an antenna state which are periodically detected; and transmitting the radio frequency capability model and the health degree model to the baseband unit in response to confirming that a communication link is established with the baseband unit.

In one embodiment, when the radio unit is powered on according to the power-on signal, the acquired radio frequency type, optical port rate information, supporting antenna capability information, capacity capability information, business mode information, power amplifier capability information and frequency band information stored in advance by the radio unit can be taken as the radio frequency capability model. The radio unit can also carry out periodic self-checking to acquire information such as the power amplifier state, channel state, the single board state and the antenna state, and the information such as the power amplifier state, the channel state, the single board state and the antenna state is taken as the health degree model. When a communication link is established between the radio unit and the baseband unit, the acquired radio frequency capability model and the acquired health degree model are transmitted to the baseband unit. After the communication link is established between the radio unit and the baseband unit, the health degree model of the radio unit can be transmitted to the baseband unit regularly, the configuration parameter can be adjusted in time, and the failure rate of the radio unit can be reduced.

Exemplarily, FIG. 4 is an example diagram of a communication parameter configuration method according to an embodiment of the present application, referring to FIG. 4, the baseband unit (BBU) is connected to the radio unit through an optical port, and a network management center of the base station is associated with an eNodeB through an operation and maintenance center (OMC) channel and without static association, and the radio unit is first powered on and started.

In operation 1, the network management issues the scene model to a base station receiving module of the baseband unit. Firstly, the user plans the physical resource information including information such as a correlation relationship between a baseband resource and a radio frequency channel, a connection relationship between an antenna and the radio frequency channel, an optical resource and a power requirement; secondly, the user can also plan service cell information which can include information such as a frequency point, a bandwidth, the number of carriers, a service mode and a cell location of a logical cell. The user can also plan the quality of service and the power saving requirement according to the situation. After a plurality of parameters of the scene model is acquired, the network management can transmit the scene model to the baseband unit.

In operation 2, the radio unit reports the radio frequency capability model to the baseband unit. After the radio unit is powered on and initialized, the radio frequency type, the optical port rate, the supporting antenna capability, the capacity capability, the supported service mode, the power amplifier capability and the frequency band information can be acquired and stored through a basic input output system (BIOS). After the communication link between the radio unit and the baseband unit is established, the radio unit can transmitted the radio frequency capability model to the baseband unit.

In operation 3, the baseband unit plans to match an optimal parameter. The baseband unit combines the radio frequency capability model to complete sector resource information of a radio function of the radio unit according to an antenna attribute of the physical resource information in the scene model and the correlation relationship between the radio frequency channel and the antenna, and combines the radio frequency capability model to complete a radio resource control (RRC) radio resource management, baseband resource information of a Layer 2 (L2) and baseband resource information of a physical layer according to the correlation relationship between the baseband and the radio frequency of the physical resource information in the scene model, the optical fiber and the optical port information, combines the resource information in the baseband unit and the sector information of the radio unit to match the baseband resource information and the sector resource information that are most suitable for the business service requirement according to the business service information in the scene model, and matches and associates the business service information with baseband resource information and sector information. The sector resource information includes location information, frequency information, uplink and downlink channel application information, power capability, and physical carrier identifier, etc. The baseband resource information includes a correlation relationship between the baseband and the radio frequency, optical fiber/optical port transmission rate, the number of carriers supported by multiple systems, etc.

In operation 4, the matched logical cell radio information is transferred to the corresponding baseband unit and the corresponding radio unit. The cell radio parameters in the business service information may be transferred to the corresponding baseband resource information. The cell radio parameters in the business service information are transferred to the corresponding sector resource information. The baseband resource information and the sector resource information may be transmitted to the baseband unit and the radio unit.

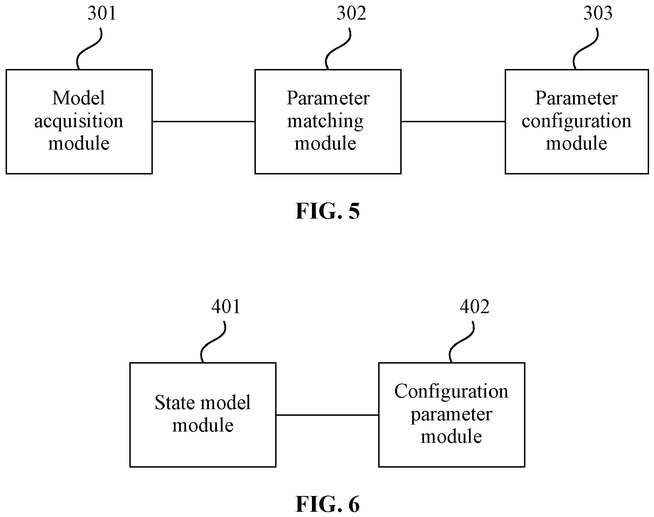

FIG. 5 is a structure diagram of a communication parameter configuration apparatus according to an embodiment of the present application. The apparatus of the embodiment of the present application can execute the communication parameter configuration method provided by any embodiment of the present application, and has functional modules and beneficial effects corresponding to the execution method. The apparatus may be implemented by software and/or hardware; the apparatus may be integrated in a baseband unit. Referring to FIG. 5, the apparatus includes a model acquisition module 301, a parameter matching module 302 and a parameter configuration module 303.

The model acquisition module 301 is configured to acquire a scene model configured in network management, and acquire a radio frequency capability model and a health degree model which are uploaded by a radio unit.

The parameter matching module 302 is configured to determine a configuration parameter according to the scene model, the radio frequency capability model and the health degree model.

The parameter configuration module 303 is configured to perform configuration according to the configuration parameter, and transmit the configuration parameter to the radio unit.

In the technical solution of the embodiment of the present application, the scene model configured in the network management is acquired and the radio frequency capability model and the health degree model of the radio unit are acquired through the model acquisition module, the parameter matching module searches the corresponding configuration parameter through the scene model, the radio frequency capability model and the health degree model, and the parameter configuration module performs the configuration according to the configuration parameter, so that an automatic configuration for parameters of the baseband unit is achieved, and the coupling degree of the distributed communication system and the workload of version release can be reduced.

In one embodiment, the scene model in the model acquisition module 301 includes physical resource information and business service information, where the physical resource information includes at least one of: connection relationship information between an antenna and a radio frequency channel, application information of an antenna, correlation relationship information between a baseband resource and a radio frequency channel, optical resource capability information, power information or optical port capability information; and the business service information includes at least one of: a cell frequency point information, a cell bandwidth information, a number of carriers, a business mode or a cell location.

In one embodiment, the radio capability model in the model acquisition module 301 includes at least one of: a radio frequency type, optical port rate information, supporting antenna capability information, capacity capability information, business mode information, power amplifier capability information or frequency band information. The health degree model includes at least one of: a power amplifier state, a channel state, a single board state and an antenna state.

In one embodiment, the parameter matching module 302 includes a model determination unit, a global matching unit and a semi-matching unit.

The model determination unit is configured to determine a matched pattern in a preset configuration parameter table according to the health degree model.

The global matching unit is configured to, in a case where the matching mode is a global matching mode, search, in the preset configuration parameter table, a physical parameter matching the radio frequency capability model and an environment parameter matching the scene model, and take the physical parameter and the environment parameter as the configuration parameter.

The global matching unit is configured to, in a case where the matching mode is a semi-matching mode, search, in the preset configuration parameter table, a physical parameter matching the radio frequency capability model and a preset environment parameter matching the radio frequency capability model, and take the physical parameter and the preset environment parameter as the configuration parameter.

In one embodiment, the scene model in the model acquisition module 301 further includes at least one of: a requirement parameter of quality of service or a requirement parameter of power saving.

FIG. 6 is a structure diagram of a communication parameter configuration apparatus according to an embodiment of the present application. The apparatus of the embodiment of the present application can execute the communication parameter configuration method provided by any embodiment of the present application, and has functional modules and beneficial effects corresponding to the execution method. The apparatus may be implemented by software and/or hardware; the apparatus may be integrated in a radio unit. Referring to FIG. 6, the apparatus includes a state model module 401 and a configuration parameter module 402.

The state model module 401 is configured to acquire a radio frequency capability model and a health degree model, and transmit the radio frequency capability model and the health degree model to a baseband unit.

The configuration parameter module 402 is configured to, in a case where a configuration parameter transmitted by the baseband unit is received, complete configuration according to the configuration parameter.

In the technical solution of the embodiment of the present application, the radio frequency capability model and the health degree model are acquired through the state model module and transmitted to the baseband unit, the configuration parameter issued by the baseband unit is acquired, and the configuration parameter module acquires the configuration parameter issued by the baseband unit, and completes the configuration according to the configuration parameter, so that an automatic configuration for parameters of the radio unit is achieved, the health degree of the radio unit can be monitored in real time, the configuration parameter is adjusted in time, the failure rate of the radio unit is reduced and the communication quality of service is improved.

In one embodiment, the state model module 401 includes an information acquisition unit and an information transmission unit.

The information acquisition unit is configured to, in a case where a power-up signal is acquired, save at least one of the following as the health degree model: a radio frequency type, optical port rate information, supporting antenna capability information, capacity capability information, business mode information, power amplifier capability information or frequency band information acquired as the radio frequency capability model, and save at least one of a power amplifier state, a channel state, a single board state or an antenna state which are periodically detected.

The information transmission module is configured to transmit the radio frequency capability model and the health degree model to the baseband unit in response to confirming that a communication link is established with the baseband unit.

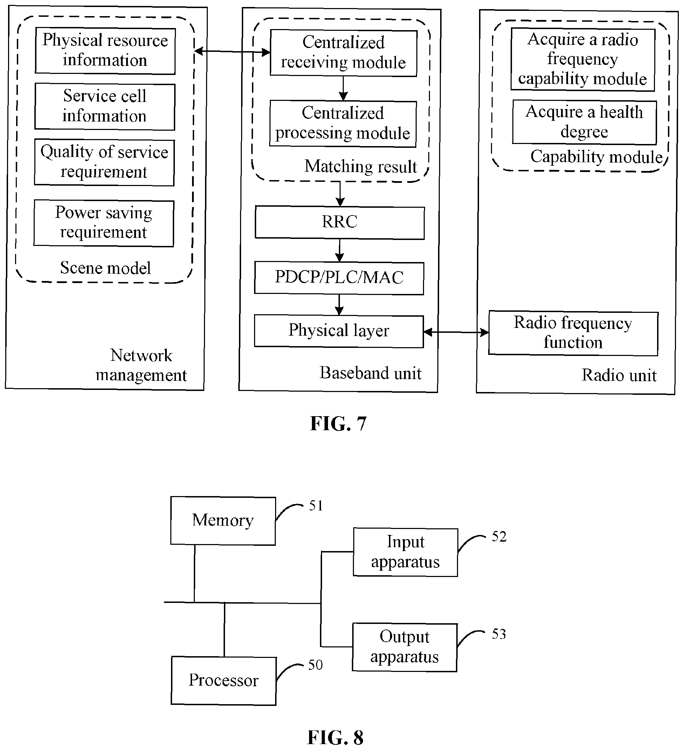

Exemplarily, FIG. 7 is an example diagram of a communication parameter configuration apparatus according to an embodiment of the present application. Referring to FIG. 7, a communication system may include a baseband unit and a radio unit, the communication parameter configuration apparatus may be integrated in the baseband unit and the radio unit separately, and the communication system may include a baseband unit, a remote radio unit (RRU), a road-side unit (RSU), an active antenna unit (AAU) and an integration base station) and an operation & maintains module NodeB (OMMB). The radio unit is responsible for receiving a radio frequency signal, the baseband processing unit is responsible for managing the radio unit, and the OMMB network management background is responsible for configuring parameters required by the baseband processing unit and the radio unit. A centralized configuration receiving module resides in the baseband processing unit, and is configured to receive the scene model configured in the network management and receive the radio frequency capability model and the health degree model which are uploaded by the radio unit.

The baseband unit may include a centralized configuration management module, and the centralized configuration management module is configured to maintain a scene module, a radio frequency capability module and a health degree monitoring module. An optimal configuration parameter value is matched according to the scene parameters, the radio frequency capability model and the health model acquired by the centralized configuration receiving module.

The baseband unit may further include a centralized configuration transmission module. The centralized configuration transmission module resides the baseband processing unit, and is configured to respond to a request of the radio unit to acquire a parameter list, and according to the configuration parameter value matched by a centralized configuration value module, transmit the matched configuration parameter value to the radio frequency module to establish a radio cell service.

The radio unit may include a capability module. In a case where the radio unit is initialized, the capability module may acquire the radio frequency capability module and transmit the radio capability model to the centralized configuration module in the baseband unit, and may further acquire the health degree of the radio unit.

The communication parameter configuration method jointly achieved by the baseband unit and the radio unit may include: (1) acquiring the scene model issued by the user through the centralized configuration receiving module in the baseband unit. The scene module includes physical resource information (mandatory), business service information (mandatory), a quality of service requirement (optional) and power saving requirement (optional). The physical resource information includes connection relationship information between an antenna and a radio frequency channel, application information of an antenna, correlation relationship information between a baseband resource and a radio frequency channel, optical resource capability information, power information and optical port capability information, etc. The business service information includes a frequency point of a logical cell, a bandwidth of a logical cell, a number of carriers of a logical cell, a business mode of a logical cell and a cell location of a logical cell, etc. The requirement of information quality of service is as follows: the user requires the radio unit self-adaptation according to the quality of service. The power saving requirement is as follows: the user requires the self-adaptive power adjustment according to the business volume. (2) When the radio unit is initialized, a self-adaptive configuration module of the radio unit acquires the radio frequency capability model of the radio unit, and transmits the radio frequency capability model in a case where a link is established with the baseband unit. The radio frequency capability model includes a radio frequency type, an optical port rate, supporting antenna capability, capacity capability, supporting business mode, power amplifier capability and frequency band information, etc. (3) When the radio unit is initialized, a state monitoring module of the radio unit acquires and maintains a health monitoring model of the radio unit. The health degree model includes a power amplifier state, a channel state, a single board state and an antenna state, etc. (4) The centralized configuration receiving module in the baseband unit is configured to acquire the radio capability model reported by the radio unit. (5) The centralized configuration receiving module in the baseband unit is configured to acquire health degree monitoring model information reported by the radio unit. (6) The centralized configuration receiving module in the baseband unit is configured to acquire information of a quality of service monitoring model reported by the baseband unit, where the quality of service monitoring model may include the number of RRC connections. (7) The centralized configuration management module in the baseband unit matches the optimal resource allocation result according to the information of the scene model, the radio frequency capability model, the quality of service model and the health degree monitoring model, and provides the optimal resource allocation result to the baseband processing unit and the radio frequency function for the radio resource management, thus achieving the purpose of self-adaptive configuration of the radio unit and the baseband unit.

FIG. 8 is a structure diagram of a device according to an embodiment of the present application. As shown in FIG. 8, the device includes a processor 50, a memory 51, an input apparatus 52 and an output apparatus 53. The device may include one or more processors 50. One processor 50 is shown as an example in FIG. 8. The processor 50, the memory 51, the input apparatus 52 and the output apparatus 53 in the device may be connected via a bus or in other manners. The connection via a bus is shown as an example in FIG. 8.

As a computer-readable storage medium, the memory 51 may be configured to store software programs, computer-executable programs and modules, such as modules (such as a model acquisition module 301, a parameter matching module 302 and a parameter configuration module 303 or a state model module 401 and a configuration parameter module 402) corresponding to the communication parameter configuration apparatus in the embodiment of the present application. The processor 50 runs the software programs, instructions and modules stored in the memory 51 to perform function applications and data processing of the device, i.e., to implement the communication parameter configuration method described above.

The memory 51 may include a program storage region and a data storage region. The program storage region may store an operating system and an application program required by at least one function. The data storage region may store data created depending on the use of a terminal. Additionally, the memory 51 may include a high-speed random-access memory and may further include a non-volatile memory, for example, at least one magnetic disk memory and flash memory or other non-volatile solid-state memories. In some examples, the memory 51 may include memories which are remotely disposed relative to the processor 50 and these remote memories may be connected to the device via a network. Examples of the preceding network include the Internet, an intranet, a local area network, a mobile communication network, and a combination thereof.

The input apparatus 52 may be configured to receive inputted digital or character information and generate key signal input related to user settings and function control of the device. The output apparatus 53 may include a display device, for example, a display screen.

Embodiments of the present application further provide a storage medium including computer-executable instructions. When executed by a computer processor, the computer-executable instructions are used for performing the communication parameter configuration method. The method includes: acquiring a scene model configured in network management, and acquiring a radio frequency capability model and a health degree model uploaded by a radio unit; determining a configuration parameter according to the scene model, the radio frequency capability model and the health degree model; and performing configuration according to the configuration parameter, and transmitting the configuration parameter to the radio unit.

Alternatively, when executed by a computer processor, the computer-executable instructions are used for performing the communication parameter configuration method. The method includes: acquiring a radio frequency capability model and a health degree model, and transmitting the radio frequency capability model and the health degree model to a baseband unit; and in a case where a configuration parameter transmitted by the baseband unit is received, completing configuration according to the configuration parameter.

Embodiments of the present application provide a storage medium including computer-executable instructions, the computer-executable instructions implement not only the above method operations but also related operations in the communication parameter configuration method provided by any embodiment of the present application.

From the preceding description of the embodiments, the present application may be implemented by means of both software and required general-purpose hardware, and also by means of hardware. The technical solutions of the present application may be embodied in the form of a software product. The software product in a computer may be stored in a computer-readable storage medium such as a floppy disk, read-only memory (ROM), random-access memory (RAM), flash memory, hard disk or optical disc in the computer and includes multiple instructions for enabling a computer device (which may be a personal computer, a server or a network device) to execute the method of many embodiments of the present application.

Units and modules included in the embodiment of the communication parameter configuration apparatus are just divided according to functional logic, and the division is not limited to this, as long as the corresponding functions can be achieved. In addition, the names of each functional unit are just intended for distinguishing and are not to limit the protection scope of the embodiments of the present application.

The preceding are only example embodiments of the present application and not intended to limit the scope of the present application.

The user terminal encompasses any appropriate type of wireless user device, such as a mobile phone, a portable data processing apparatus, a portable web browser or a vehicle-mounted mobile station.

Various embodiments of the present application may be implemented in hardware or special-purpose circuits, software, logic, or any combination thereof. For example, some aspects may be implemented in hardware while other aspects may be implemented in firmware or software that may be executed by a controller, a microprocessor, or another computing apparatus, though the present application is not limited thereto.

The embodiments of the present application may be implemented by computer program instructions executed by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions or may represent a combination of program steps with logic circuits, modules, and functions. A computer program may be stored in a memory. The memory may be of any type suitable to the local technical environment and may be implemented by using any suitable data storage technology. For example, the memory may be a read-only memory (ROM), a random access memory (RAM), an optical memory apparatus and system (digital video disc (DVD) or compact disc (CD)), or the like. Computer-readable media may include non-transitory storage media. The data processor may be of any type suitable for the local technical environment, such as a general-purpose computer, a special-purpose computer, a microprocessor, a digital signal processor (DSP), an application specific integrated circuit (ASIC), a field-programmable gate array (FPGA) and a processor based on a multi-core processor architecture.

## Claims

1. A communication parameter configuration method, applied to a baseband unit, comprising:
acquiring a scene model configured in network management, and acquiring a radio frequency capability model and a health degree model which are uploaded by a radio unit;
determining a configuration parameter according to the scene model, the radio frequency capability model and the health degree model; and
performing configuration according to the configuration parameter, and transmitting the configuration parameter to the radio unit.

2. The method of claim 1, wherein the scene model comprises physical resource information and business service information;
wherein the physical resource information comprises at least one of: connection relationship information between an antenna and a radio frequency channel, application information of an antenna, correlation relationship information between a baseband resource and a radio frequency channel, optical resource capability information, power information or optical port capability information; and
wherein the business service information comprises at least one of: a cell frequency point information, cell bandwidth information, a number of carriers, a business mode or a cell location.

3. The method of claim 1, wherein the radio capability model comprises at least one of: a radio frequency type, optical port rate information, supporting antenna capability information, capacity capability information, business mode information, power amplifier capability information or frequency band information; and
the health degree model comprises at least one of: a power amplifier state, a channel state, a single board state or an antenna state.

4. The method of claim 1, wherein determining the configuration parameter according to the scene model, the radio frequency capability model and the health degree model comprises:
determining a matched pattern in a preset configuration parameter table according to the health degree model;
in a case where the matching mode is a full matching mode, searching, in the preset configuration parameter table, a physical parameter matching the radio frequency capability model and an environment parameter matching the scene model, and taking the physical parameter and the environment parameter as the configuration parameter; and
in a case where the matching mode is a half matching mode, searching, in the preset configuration parameter table, a physical parameter matching the radio frequency capability model and a preset environment parameter matching the radio frequency capability model, and taking the physical parameter and the preset environment parameter as the configuration parameter.

5. The method of claim 1, wherein the scene model further comprises at least one of: a requirement parameter of quality of service and a requirement parameter of power saving.

6. A communication parameter configuration method, applied to a radio unit, comprising:
acquiring a radio frequency capability model and a health degree model, and transmitting the radio frequency capability model and the health degree model to a baseband unit; and
in a case where a configuration parameter transmitted by the baseband unit is received, completing configuration according to the configuration parameter.

7. The method of claim 6, wherein acquiring the radio frequency capability model and the health degree model, and transmitting the radio frequency capability model and the health degree model to the baseband unit, comprises:
in a case where a power-up signal is acquired, saving at least one of the following as the radio frequency capability model: a radio frequency type, optical port rate information, supporting antenna capability information, capacity capability information, business mode information, power amplifier capability information or frequency band information which are acquired , and saving at least one of the following as the health degree model: a power amplifier state, a channel state, a single board state and an antenna state which are periodically detected; and
in response to confirming that a communication link is established with the baseband unit, transmitting the radio frequency capability model and the health degree model to the baseband unit.

8. A communication parameter configuration apparatus, applied to a baseband unit, comprising:
a model acquisition module, which is configured to acquire a scene model configured in network management, and acquire a radio frequency capability model and a health degree model which are uploaded by a radio unit;
a parameter matching module, which is configured to determine a configuration parameter according to the scene model, the radio frequency capability model and the health degree model; and
a parameter configuration module, which is configured to perform configuration according to the configuration parameter, and transmit the configuration parameter to the radio unit.

9. A communication parameter configuration apparatus applied to a radio unit, comprising:
a state model module, which is configured to acquire a radio frequency capability model and a health degree model, and transmit the radio frequency capability model and the health degree model to a baseband unit; and
a configuration parameter module, which is configured to complete, in a case where a configuration parameter transmitted by the baseband unit is received, configuration according to the configuration parameter.

10. A device, comprising:
at least one processor; and
a memory, configured to store at least one program, wherein
the at least one program is executed by the at least one processor to cause the at least one processor to implement the communication parameter configuration method of any one of claims 1 to 7.

11. A computer-readable storage medium, which is configured to store a computer program which, when executed by a processor, implements the communication parameter configuration method of any one of claims 1 to 7.
